# EUROPÄISCHE PATENTSCHRIFT

(11) **EP 2 060 794 B1**
(45) Veröffentlichungstag und Bekanntmachung des Hinweises auf die Patenterteilung: **04.05.2016**
(21) Anmeldenummer: 08018523.4
(22) Anmeldetag: 23.10.2008
(51) Int. Cl.: F04D 17/16, F04D 19/04, F04D 29/059, F04D 29/063, F16C 33/10, F16C 33/66

(54) **Vakuumpumpe mit Schmiermittelpumpe**
Vacuum pump with lubricant pump
Pompe à vide dotée d'une pompe à lubrifiant

(30) Priorität: 13.11.2007 DE 102007053979
(43) Veröffentlichungstag der Anmeldung: 20.05.2009
(73) Patentinhaber: Pfeiffer Vacuum GmbH, 35614 Aßlar (DE)
(72) Erfinder: Eilers, Martin, 35614 Asslar (DE); Willig, Michael, 35633 Lahnau (DE)
(74) Vertreter: Manitz, Finsterwald & Partner GbR

(56) Entgegenhaltungen:
- EP-A2- 1 477 721
- DE-A1- 2 263 612
- DE-A1- 2 853 742
- GB-A- 367 541
- US-A- 4 116 592
- US-A- 4 140 441

## Beschreibung

Die Erfindung betrifft eine Vakuumpumpe mit einem Wälzlager, welches zur Unterstützung eines schnelldrehenden Bauteils dient, einer Schmiermittelpumpe, welche einen Rotor umfasst, der wenigstens eine eine Pumpwirkung erzeugende Struktur aufweist, und mit einem geschlossenen Schmiermittelkreislauf, in welchem Wälzlager und Schmiermittelpumpe angeordnet sind.

Vakuumpumpen mit schnelldrehenden Bauteilen sind heute aus vielen industriellen Anwendungen nicht mehr wegzudenken. Insbesondere bei Vakuumpumpen für den molekularen Strömungsbereich und zur Erzeugung von Hochvakuum liegt die schnelle Drehung dieser Bauteile im Bereich einiger Zehntausend Umdrehungen pro Minute. Zwei Arten der Lagerung dieser Bauteile werden im Stand der Technik genutzt. Zum einen sind dies Magnetlager, die passiv und aktiv ausgeführt sind. Zum anderen werden Präzisionswälzlager genutzt. Diese Wälzlager benötigen ein Schmiermittel, um den Verschleiss so gering wie möglich zu halten. Hierbei kommt oftmals eine Schmiermittelumlaufschmierung zum Einsatz, so dass die Vakuumpumpe einen Schmiermittelkreislauf aufweist, in welchem das Wälzlager und eine Schmiermittelpumpe angeordnet sind.

Eine Lösung für den Schmiermittelkreislauf einer solchen Vakuumpumpe mit Schmiermittelumlaufschmierung schlägt die DE-OS 103 21 326 vor. Die dort vorgesehene Schmiermittelpumpe weist zwei aufeinander zu fördernde Spindeln auf, von denen jeweils nur eine in Schmiermittel eingetaucht ist. Das Problem einer solchen Lösung ist, die Lager der Schmiermittelpumpe zuverlässig mit Schmiermittel zu versorgen. Eine schlechte Versorgung kann jedoch die Zuverlässigkeit gefährden. Zudem ist es der Wunsch, eine kompaktere Anordnung zu finden.

Der Erfindung liegt die Aufgabe zugrunde, eine Schmiermittelpumpe mit einfachem Aufbau und hoher Zuverlässigkeit vorzustellen.

Diese Aufgabe wird gelöst durch eine Vakuumpumpe mit den kennzeichnenden Merkmalen des ersten Anspruchs. Die Ansprüche 2 bis 10 geben vorteilhafte Weiterbildungen an.

Die Anordnung einer hohlen Welle im Schmiermittelkreislauf, auf der der Rotor der Schmiermittelpumpe gelagert ist, ermöglicht eine zuverlässige Versorgung der Lager der Schmiermittelpumpe mit Schmiermittel. Dies erhöht die Lebensdauer der Schmiermittelpumpe und damit der gesamten Vakuumpumpe. Eine kompaktere Bauweise wird ermöglicht, da Schmiermittelpumpe und ein Teil der Schmiermittelkreislaufs ineinander integriert sind.

In einer ersten Weiterbildung sind Rotor und hohle Achse Teile eines radialen Gleitlagers. Dies vermeidet die Verwendung von Kugellagern innerhalb der Schmiermittelpumpe, was die Lebensdauer erhöht.

In einer andere Weiterbildung umgibt eine Schmiermittelkammer den Rotor wenigstens teilweise. Hierdurch werden Schmiermittelreservoir und Schmiermittelpumpe in eine Baugruppe vereinigt, wodurch Platz und Teile eingespart werden.

In einer Weiterbildung dient ein helikaler Kanal als fördernde Struktur, wobei er auf einem Pumpteil des Rotors angeordnet ist, dessen Durchmesser größer als der Durchmesser eines Wellenabschnitt des Rotors ist.

Für einen konstanten Fluss des Schmiermittels zum Beginn des helikalen Kanals hin ist es von Vorteil, zwischen Wellenabschnitt und helikalem Kanal eine über

Fliehkraftwirkung fördernde Struktur anzuordnen. Auch wenn zwischen Schwerkraftrichtung und Achse des Rotors ein von Null verschiedener Winkel eingestellt ist, wird ein konstanter Förderstrom erzielt. Metallspäne, deren spezifisches Gewicht größer als der des Schmiermittels ist, werden durch die Fliehkraft nach außen geschleudert und treten nicht in den helikalen Kanal ein.

Die über Fliehkraftwirkung fördernde Struktur ist in einer einfachen Ausführung als Konus ausgebildet, dessen kleinster Durchmesser dem Durchmesser des Wellenabschnitts und dessen größter Durchmesser dem Durchmesser des Pumpteils entspricht. Dies lässt sich sehr einfach und damit kostengünstig herstellen.

In einer anderen Weiterbildung ist ein durch das geförderte Schmiermittel geschmiertes axiales Gleitlager auf der dem helikalen Kanal entgegenliegenden Ende des Rotors angeordnet. Hierdurch wird die durch die Förderung des Schmiermittels entstehende axiale Kraft dazu ausgenutzt, den Rotor in das Gleitlager zu drücken und so einen stabilen Betrieb zu gewährleisten.

Die Erfindung lässt sich durch ein in der Schmiermittelkammer angeordnetes Sieb weiterbilden, welches den Rotor umgibt. Auf diese Weise werden eine Verschmutzung der fördernden Strukturen innerhalb der Schmiermittelpumpe und ein Eintreten von Partikeln in die Vakuumpumpe verhindert. Durch Anordnen des Siebs in der Schmiermittelpumpe entfällt dies an anderer Stelle im Schmiermittelkreislauf, wodurch ein zusätzliches Bauteil vermieden und Fehlermöglichkeiten ausgeschlosssen werden.

Eine andere Weiterbildung besteht darin, die Schmiermittelpumpe in einem lösbar mit der Vakuumpumpe verbundenen Gehäuse anzuordnen. Dies erleichtert einerseits den Austausch der Schmiermittelpumpe und erlaubt andererseits, mehrere Montagewinkel vorzusehen. Hierdurch ist es möglich, die Vakuumpumpe für verschiedene Einbaulagen umrüstbar zu gestalten.

In einer Weiterbildung weist das Gehäuse einen transparenten Abschnitt auf. Dies erlaubt die visuelle Begutachtung des Schmiermittelzustands und eine leichte Kontrolle der Funktion

Anhand eines Ausführungsbeispiels soll die Erfindung näher erläutert und die Vorteile vertieft werden. Es zeigen:
- Fig. 1:: Schnitt durch eine Vakuumpumpe mit einer Schmiermittelpumpe.
- Fig. 2:: Schnitt durch die Schmiermittelpumpe.

Im Folgenden bezeichnen gleiche Bezugszeichen gleiche Bauteile.

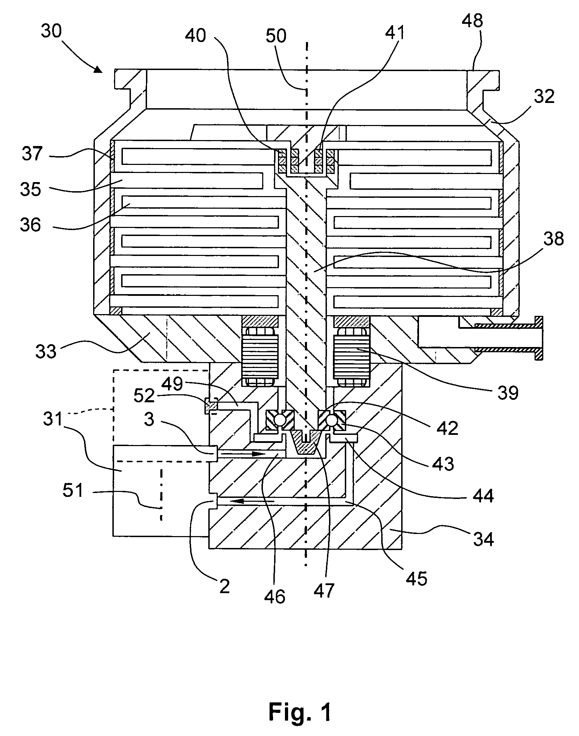

In Figur 1 ist ein Schnitt durch eine Vakuumpumpe 30 mit einer Schmiermittelpumpe 31 dargestellt. Die Vakuumpumpe ist aus einem mehrteiligen Gehäuse zusammengesetzt. In einem ersten, hochvakuumseitigen Gehäuseteil 32 sind die pumpaktiven Bauteile angeordnet. Dieser Gehäuseteil ist mittels eines Flansches 48 und nicht gezeigten Verbindungselementen mit dem Rezipienten verbindbar. Dabei handelt es sich um Statorscheiben 35 und Rotorscheiben 36, die jeweils Schaufeln tragen und in mehreren Ebenen angeordnet sind. Die Statorscheiben werden durch Distanzringe auf axialem Abstand gehalten. Anstelle der Schaufeln können andere pumpaktive Strukturen verwendet werden, beispielsweise solche nach Holweck und Siegbahn. Die Rotorscheiben sind mit axialem Abstand auf einer Rotorwelle 38 angeordnet. In diesen axialen Abstand greifen die Statorscheiben ein. Die Rotorwelle wird von einem Antrieb 39 in schnelle Drehung versetzt. Um den gewünschten Pumpeffekt zu erzielen, liegt diese schnelle Drehung im Bereich einige 10.000 Umdrehungen pro Minute. Bei dieser Drehzahl wird durch die pumpaktiven Bauteile ein Hochvakuum erzeugt, das heißt der molekulare Strömungsbereich wird erreicht. Der Antrieb befindet sich im zweiten, vorvakuumseitigen Gehäuseteil.

Die Rotorwelle ist durch zwei jeweils an ihrem Ende vorgesehen Lager drehbar unterstützt. Auf der Hochvakuumseite bilden rotorseitige Permanentmagnetringe 40 und statorseitige Permanentringe 41 ein verschleißfreies Permanentmagnetlager, welches keiner Schmierung bedarf. Am entgegengesetzten Wellenende ist ein Wälzlager angeordnet, dessen Innenring 42 mittels einer Spritzmutter 47 auf der Welle fixiert ist. Der Außenring 43 ist im dritten Gehäuseteil 34 gehaltert. Diese Halterung kann in der Figur nicht gezeigte aber im Stand der Technik bekannte elastische Bauteile umfassen, mit denen der Außenring schwingfähig gehaltert wird.

Die Anzahl der Gehäuseteile ist nicht bindend. Beispielsweise können zweiter 33 und dritter 34 Gehäuseteil zusammengefasst werden. Andere Aufteilungen, die die vorgenannte Funktionen erfüllen sind denkbar.

Das Wälzlager beinhaltet aufeinander abrollende Bauteile und Bedarf daher der Schmierung. Um diese Schmierung zu gewährleisten, weist die Vakuumpumpe einen Schmiermittelkreislauf auf. Der Schmiermittelkreislauf beinhaltet einen Zulauf 46, über den Schmiermittel in Richtung Lager durch den dritten Gehäuseteil gefördert wird. Er gelangt auf die Spritzmutter 47, die konisch gestaltet ist. Hierdurch entsteht bei schneller Drehung eine Fliehkraftförderung, die Schmiermittel in das Wälzlager hineinfördert. Von dort gelangt es, beispielsweise durch Schwerkraftwirkung, in die Sammelkammer 44. Anstelle der Schwerkraftwirkung sind geeignete Fördermittel denkbar, beispielsweise poröse Körper, die durch Kapillarwirkung einen Schmiermitteltransport bewirken. Aus der Sammelkammer gelangt das Schmiermittel durch einen Rücklauf 45 zum Einlass 2 der in dieser Figur nur als Funktionsgruppe dargestellten Schmiermittelpumpe 31. Diese setzt das am Einlass anstehende Schmiermittel unter Druck und stellt es an ihrem Auslass 3 bereit. Dieser Auslass steht in Fluidverbindung mit dem Zulauf 47, so dass der Schmiermittelkreislauf geschlossen ist. Der Schmiermittelkreislauf kann weitere Komponenten enthalten, beispielsweise Flusssensoren.

Die Schmiermittelpumpe ist in der Figur 1 als an den dritten Gehäuseteil angeflanschte Baueinheit gezeigt. Denkbar ist jedoch, Teile von ihr oder ihre Gesamtheit in die Vakuumpumpe zu integrieren.

Die Achse 50 der Rotorwelle der Vakuumpumpe ist parallel zur Rotorachse 51 der Schmiermittelpumpe orientiert. Hierdurch lässt sich eine vorteilhafte Drehbarkeit der ganzen Vakuumpumpe über einen weiten Schwenkbereich erzielen. Insbesondere sind eine Orientierung parallel und senkrecht zur Schwerkraftrichtung möglich.

Ein zweiter Rücklauf 49 ermöglicht es, die Schmiermittelpumpe gegenüber der zuvor beschriebenen Orientierung um 180° gedreht mit der Vakuumpumpe zu verbinden und die Vakuumpumpe so ebenfalls um 180° gedreht zu betreiben. In dieser Orientierung, die in Figur 1 durch den gestrichelte Kasten veranschaulicht wird, wird der zweite Rücklauf mit dem Einlass 2 der Schmiermittelpumpe verbunden. Dieser zweite Rücklauf ermöglicht es, durch Drehen der Schmiermittelpumpe die Vakuumpumpe für alle Orientierungen gegenüber der Schwerkraftrichtung benutzen zu können. Der jeweils nicht genutzte Rücklauf wird durch einen Verschluss 52 verschlossen. In einer Weiterbildung sind erster und zweiter Rücklauf so gestaltet, dass sie innerhalb der Vakuumpumpe zusammengeführt sind und der gemeinsame Austritt des Rücklaufs aus der Vakuumpumpe mit dem Einlass der Schmiermittelpumpe verbunden ist. Auf diese Art können Montagefehler vermieden werden.

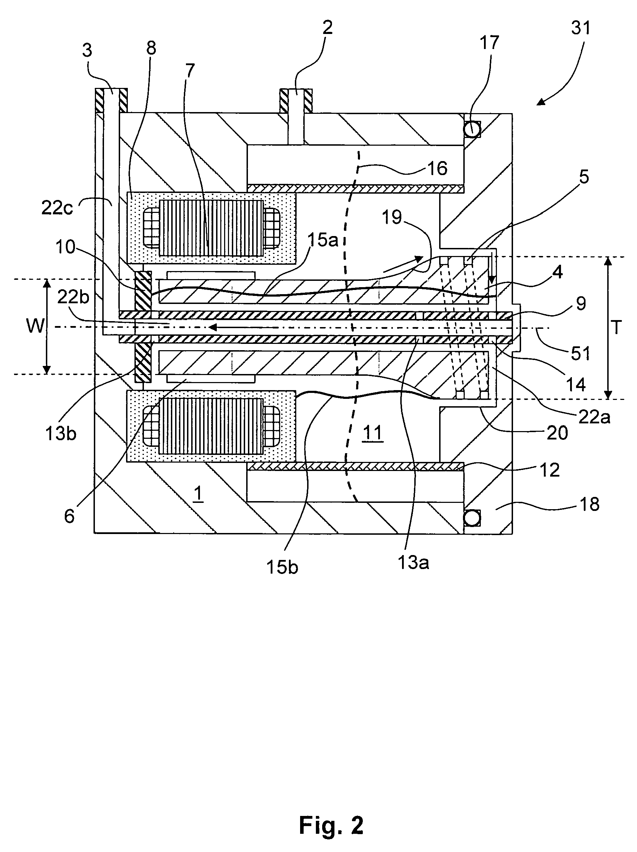

Das Funktionsprinzip der Schmiermittelpumpe 31 soll anhand der Figur 2, welche die Schmiermittelpumpe im Schnitt zeigt, näher erläutert werden.

Ein Gehäuse 1 weist einen Einlass 2 und einen Auslass 3 auf. Der Einlass steht mit einer Schmiermittelkammer 11 in Fluidverbindung. Innerhalb des Gehäuses ist eine hohle Achse 9 angeordnet, die die Schmiermittelkammer durchsetzt. Die hohle Achse ist wenigstens abschnittsweise von einem Rotor 4 umgeben, der sich ebenfalls in der Schmiermittelkammer befindet. Auf dem Rotor sind an einem Wellenabschnitt Dauermagnete 6 vorgesehen, die mit elektrischen Spulen 7 den Antrieb bilden und den Rotor in Drehung versetzen. Zur elektrischen Isolation sind die elektrischen Spulen in eine Vergussmasse 8 eingebettet. Ein Sieb 12 ist derart in der Schmiermittelkammer angeordnet, dass es den Rotor vollständig umgibt und seine Oberfläche vom Einlass 2 trennt. Dadurch kann nur durch das Sieb gefiltertes Schmiermittel vom Einlass zur Oberfläche des Rotors und damit in den Förderprozess gelangen. Mit dieser Maßnahme wird vermieden, das Partikel, die vom Schmiermittel innerhalb der Vakuumpumpe aufgenommen wurden, wieder in diese zurückgefördert werden. Solche Partikel entstehen beispielsweise als Abrieb im Wälzlager.

Das Gehäuse 1 weist einen transparenten Abschnitt 18 auf. Dies erlaubt die visuelle Begutachtung des Schmiermittelraumes und des darin befindlichen Schmiermittels. Eine zwischen transparentem Abschnitt und dem Rest vom Gehäuse vorgesehene Dichtung 17 verhindert das Austreten von Schmiermittel.

Der Rotor 4 wird von Gleitlagern drehbar unterstützt. Die ihn durchsetzende hohle Achse bildet dabei ein Radiallager und gewährleistet den zentrischen Lauf des Rotors. An einem Ende des Rotors ist ein Axiallager 10 angeordnet. Dieses Ende liegt demjenigen gegenüber, in dessen Richtung der helikale Kanal 5 das Schmiermittel fördert. Die Spalte der Gleitlager zwischen Rotor und hohler Achse einerseits und Rotor und Axiallager 10 andererseits sind in der Figur 2 der Übersichtlichkeit halber übergroß dargestellt. Die Förderwirkung des helikalen Kanals erzeugt eine in Achsrichtung wirkende Kraft auf den Rotor. Diese Kraft wirkt auf das Axiallager 10 ein. In der hohlen Achse befindet sich Schmiermittel, welches bei eingeschalteter Schmiermittel unter Druck steht. Radiallagerversorgungsbohrungen 13a und Axiallagerversorgungsbohrungen 13b sorgen für die Schmierung des Rotors, indem durch sie das unter Druck stehende Schmiermittel aus der hohlen Achse austritt und einen Schmiermittelfilm zwischen hohler Achse und Rotor beziehungsweise Rotor und Axiallager ausbildet. Durch die Förderung des Schmiermittels wird somit gleichzeitig die Schmierung der Gleitlager des Rotors bewirkt. Weitere Komponenten sind daher nicht notwendig, und es wird eine sehr hohe Lebensdauer erreicht. Ein weiterer Vorteil dieser Gestaltung ist, dass das Schmiermittel die Funktion von Dichtmitteln übernimmt. Elastomerringe oder andere bekannte Dichtmittel entfallen, da die Schmiermittelfilme im Radial- und Axiallager die Spalte abdichten, über welche die Bereiche der Schmiermittelpumpe mit unter Druck stehendem Schmiermittel gegen die restlichen Bereiche der Schmiermittelpumpe abdichten. Schmiermittel steht im Achsenzulauf 22a, im Innenraum 22b der hohlen Achse und im Schmiermittelkanal 22c unter Druck. Da Rotor und hohle Achse eine Einheit bilden, ergibt sich als weiterer Vorteil, dass bei der Gestaltung der Halterung der hohlen Achse im Gehäuse keine hohen Genauigkeiten gefordert sind.

Die Förderwirkung der Schmiermittelpumpe beruht auf der Gestaltung des Rotors. Dieser weist zunächst im Bereich einen Wellenabschnitts einen ersten Durchmesser W auf. Im Bereich des helikalen Kanals weist der Rotor einen zweiten Durchmesser T auf. Der Durchmesser T ist größer als der Durchmesser W. Die Aufweitung des Durchmessers vom Wert W auf den Wert T erfolgt im Bereich eines Konus 19. Dieser Konus bewirkt eine Förderung des Schmiermittels durch Fliehkraft in Richtung des größeren Durchmessers. Am größeren Durchmesser ist der helikale Kanal 5 angeordnet. Der Rotorabschnitt mit diesem helikalen Kanal befindet sich in einer zylindrischen Ausnehmung 20. Der Spalt zwischen der Wandung dieser Ausnehmung und der Rotoroberfläche ist derart bemessen, dass die Förderwirkung unterstützt wird. Mit Pfeilen ist der Förderweg veranschaulicht. Schmiermittel wird entlang des Konus' 19 in den Bereich mit dem helikalen Kanal gefördert. Dieser fördert das Schmiermittel entlang einer Stirnfläche des Rotors zur hohlen Achse. Durch Eintrittsbohrungen 14 gelangt das unter Druck stehende Schmiermittel in die hohle Achse und wird durch diese in Richtung Auslass 3 der Schmiermittelpumpe gefördert.

Ein Vorteil dieser Gestaltung ist die Orientierbarkeit der Schmiermittelpumpe in Bezug zur Schwerkraftrichtung. Der Verlauf der Schmiermitteloberfläche in der Schmiermittelkammer ist in Figur 2 für zwei Orientierungen der Schmiermittelpumpe angegeben.

Die Schmiermitteloberfläche 16 bildet sich aus, wenn die Rotorachse im wesentlichen parallel zur Schwerkraftrichtung orientiert ist. Konus und helikaler Kanal tauchen vollständig in das Schmiermittel ein. Bei Drehung des Rotors fördert der helikale Kanal in Schwerkraftrichtung, wodurch das Schmiermittel durch die hohle Achse entgegen der Schwerkraft aufsteigt.

Die Schmiermitteloberfläche 15 bildet sich aus, wenn die Rotorachse senkrecht zur Schwerkraftrichtung orientiert ist. Die Schmiermitteloberfläche steht in Bezug zur Schwerkraftrichtung oberhalb der hohlen Achse. Die Förderwirkung beruht in diesem Fall maßgeblich auf dem Konus, der den helikalen Kanal auch dann mit Schmiermittel versorgt, wenn dieser Teil des Rotors aus dem Schmiermittel herausragt. Ein kontinuierlicher Förderstrom wird durch den Konus erst möglich, die Bildung von Luftblasen im Schmiermittelstrom vermieden. Solche Luftblasen würden die Schmiermittelversorgung der Lager der Vakuumpumpe stark gefährden.

Der Füllstand des Schmiermittels kann in zuletzt genannten Orientierung der Schmiermittelpumpe maximal bis zu einem Mindeststand 15b absinken. Bei diesem Mindeststand berührt der Rotor gerade noch die Oberfläche des Schmiermittels und nimmt so Schmiermittel zur Förderung auf. Dies begrenzt die im gesamten Schmiermittelsystem in Umlauf befindliche Schmiermittelmenge. Dadurch wird die Nutzungszeit pro Schmiermittelmenge gesenkt und so die Lebensdauer des Schmiermittels und damit auch der Vakuumpumpe erhöht.

Da die Schmiermittelpumpe parallel und senkrecht zur Schwerkraftrichtung orientiert werden kann, ergeben sich große Spielräume bei der Orientierung der Vakuumpumpe. Besonders vorteilhaft ist es, die Achsen der Rotoren von Schmiermittelpumpe und Vakuumpumpe parallel zueinander auszurichten. Auf diese Weise wird der Spielraum besonders gut ausgeschöpft. Durch die oben beschriebene Gestaltung des Schmiermittelpfades innerhalb der Vakuumpumpe wird eine Alllagenfähigkeit der Vakuumpumpe erreicht.

Denkbar ist es, die Schmiermittelpumpe innerhalb des Gehäuses der Vakuumpumpe anzuordnen.

## Patentansprüche

1. Vakuumpumpe (30) mit einem Wälzlager, welches zur Unterstützung eines schnelldrehenden Bauteils dient, mit einer Schmiermittelpumpe (31), welche einen Rotor (4) umfasst, der wenigstens eine eine Pumpwirkung erzeugenden Struktur aufweist, und mit einem geschlossenen Schmiermittelkreislauf, in welchem Wälzlager und Schmiermittelpumpe angeordnet sind, **dadurch gekennzeichnet, dass** der Rotor auf einer im Schmiermittelkreislauf angeordneten hohlen Achse (9) drehbar gelagert ist.

2. Vakuumpumpe nach Anspruch 1, **dadurch gekennzeichnet, dass** Rotor (4) und hohle Achse (9) Teile eines radialen Gleitlagers sind.

3. Vakuumpumpe nach Anspruch 1 oder 2, **dadurch gekennzeichnet, dass** eine Schmiermittelkammer (11) den Rotor (4) wenigstens teilweise umgibt.

4. Vakuumpumpe nach einem der vorhergehenden Ansprüche, **dadurch gekennzeichnet, dass** ein helikaler Kanal (5) auf einem Pumpteil des Rotors angeordnet ist, dessen Durchmesser (T) größer als der Durchmesser (W) eines Wellenabschnitts des Rotors ist.

5. Vakuumpumpe nach einem der vorhergehenden Ansprüche, **dadurch gekennzeichnet, dass** der Rotor (4) eine zwischen Wellenabschnitt und einem helikalen Kanal (5) angeordnete und über Fliehkraftwirkung fördernde Struktur aufweist.

6. Vakuumpumpe nach Anspruch 5, **dadurch gekennzeichnet, dass** die über Fliehkraftwirkung fördernde Struktur einen Konus (19) umfasst, dessen kleinster Durchmesser dem Durchmesser des Wellenabschnitts (W) und dessen größter Durchmesser dem Durchmesser des Pumpteils (T) entspricht.

7. Vakuumpumpe nach einem der Ansprüche 4 bis 6, **dadurch gekennzeichnet, dass** an einem dem helikalen Kanal (5) entgegenliegende Ende des Rotors ein durch das geförderte Schmiermittel geschmiertes axiales Gleitlager (10) angeordnet ist.

8. Vakuumpumpe nach einem der vorhergehenden Ansprüche, **dadurch gekennzeichnet, dass** ein in der Schmiermittelkammer (11) vorgesehenes Sieb (12) den Rotor wenigstens teilweise umgibt.

9. Vakuumpumpe nach einem der vorhergehenden Ansprüche, **dadurch gekennzeichnet, dass** die Schmiermittelpumpe (31) in einem lösbar mit der Vakuumpumpe (30) verbundenen Gehäuse (1) angeordnet ist.

10. Vakuumpumpe nach Anspruch 9, **dadurch gekennzeichnet, dass** das Gehäuse (1) einen transparenten Abschnitt (18) aufweist, der die visuelle Inspektion der Schmiermittelpumpe (31) ermöglicht.

## Claims

1. A vacuum pump (30) having a roller element bearing which serves for the support of a fast-rotating component, having a lubricant pump (31) which comprises a rotor (4) which has at least one structure generating a pump effect, and having a closed lubricant circuit in which the roller element bearing and the lubricant pump are arranged, **characterized in that** the rotor is rotatably supported on a hollow axle (9) arranged in the lubricant circuit.

2. A vacuum pump in accordance with claim 1, **characterized in that** the rotor (4) and the hollow axle (9) are parts of a radial slide bearing.

3. A vacuum pump in accordance with claim 1 or claim 2, **characterized in that** a lubricant chamber (11) at least partly surrounds the rotor (4).

4. A vacuum pump in accordance with any one of the preceding claims, **characterized in that** a helical passage (5) is arranged on a pump part of the rotor and its diameter (T) is larger than the diameter (W) of a shaft section of the rotor.

5. A vacuum pump in accordance with any one of the preceding claims, **characterized in that** the rotor (4) has a structure which is arranged between the shaft section and a helical passage (5) and which conveys via a centrifugal effect.

6. A vacuum pump in accordance with claim 5, **characterized in that** the structure conveying via a centrifugal effect comprises a cone (19) whose smallest diameter corresponds to the diameter of the shaft section (W) and whose largest diameter corresponds to the diameter of the pump part (T).

7. A vacuum pump in accordance with any one of the claims 4 to 6, **characterized in that** an axial slide bearing (10) lubricated by the conveyed lubricant is arranged at an end of the rotor disposed opposite the helical passage (5).

8. A vacuum pump in accordance with any one of the preceding claims, **characterized in that** a screen (12) provided in the lubricant chamber (11) at least partly surrounds the rotor.

9. A vacuum pump in accordance with any one of the preceding claims, **characterized in that** the lubricant pump (31) is arranged in a housing (1) releasably connected to the vacuum pump (30).

10. A vacuum pump in accordance with claim 9, **characterized in that** the housing (1) has a transparent section (18) which allows a visual inspection of the lubricant pump (31).

## Revendications

1. Pompe à vide (30) comprenant un palier à roulements qui sert au soutien d'un composant en rotation rapide, comprenant une pompe à lubrifiant (31) qui inclut un rotor (4), lequel comprend au moins une structure engendrant un effet de pompage, et comprenant un circuit de lubrifiant fermé dans lequel le palier à roulements et la pompe à lubrifiant sont agencés, **caractérisé en ce que** le rotor est monté en rotation sur un axe de creux (9) agencé dans le circuit de lubrifiant.

2. Pompe à vide selon la revendication 1, **caractérisée en ce que** le rotor (4) et l'axe creux (9) font partie d'un palier lisse radial.

3. Pompe à vide selon la revendication 1 ou 2, **caractérisée en ce qu'**une chambre à lubrifiant (11) entoure au moins partiellement le rotor (4).

4. Pompe à vide selon l'une des revendications précédentes, **caractérisée en ce qu'**un canal hélicoïdal (5) est agencé sur une partie de pompage du rotor dont le diamètre (T) est plus grand que le diamètre (W) d'un tronçon d'arbre du rotor.

5. Pompe à vide selon l'une des revendications précédentes, **caractérisée en ce que** le rotor (4) comprend une structure agencée entre le tronçon d'arbre et un canal hélicoïdal (5) et assurant un refoulement via l'effet des forces d'inertie.

6. Pompe à vide selon la revendication 5, **caractérisée en ce que** la structure assurant un refoulement via l'effet des forces d'inertie inclut un cône (19) dont le plus petit diamètre correspond au diamètre du tronçon d'arbre (W) et dont le plus grand diamètre correspond au diamètre de la partie de pompage (T).

7. Pompe à vide selon l'une des revendications 4 à 6, **caractérisée en ce qu'**un palier lisse axial (10), lubrifié par le lubrifiant refoulé, est agencé à une extrémité du rotor à l'opposé du canal hélicoïdal (5).

8. Pompe à vide selon l'une des revendications précédentes, **caractérisée en ce qu'**un tamis (12) prévu dans la chambre à lubrifiant (11) entoure au moins partiellement le rotor.

9. Pompe à vide selon l'une des revendications précédentes, **caractérisée en ce que** la pompe à lubrifiant est agencée dans un boîtier (1) relié de façon détachable avec la pompe à vide (30).

10. Pompe à vide selon la revendication 9, **caractérisée en ce que** le boîtier (1) comprend une portion transparente (18) qui permet l'inspection visuelle de la pompe à lubrifiant (31).
